**Europäisches Patentamt**

**European Patent Office**

**Office européen des brevets**

(19)

(11) Numéro de publication: **0 140 805 B1**

(12) **FASCICULE DE BREVET EUROPÉEN**

(45) Date de publication du fascicule du brevet:
13.01.88

(51) Int. Cl.⁴: **A 23 C 11/02**, A 23 C 9/20

(21) Numéro de dépôt: **84420170.7**

(22) Date de dépôt: **11.10.84**

(54) **Lait artificiel pour l'alimentation des nouveaux-nés et des jeunes enfants.**

(30) Priorité: **14.10.83 FR 8316664**

(43) Date de publication de la demande:
**08.05.85 Bulletin 85/19**

(45) Mention de la délivrance du brevet:
**13.01.88 Bulletin 88/2**

(84) Etats contractants désignés:
**BE DE GB IT NL SE**

(56) Documents cité:
**EP-A-0 082 818**
**FR-A-2 150 842**
**FR-A-2 197 605**
**FR-A-2 522 935**
**GB-A-955 347**
**US-A-2 611 706**

**CHEMICAL ABSTRACTS, vol. 94, no. 9, 2 mars 1981,
page 445, no. 62456c, Columbus, Ohio, US; L.
JANSSON et al.: "Vitamin E and fatty acid
composition of human milk"**

(73) Titulaire: **BIO- EXTRACTION, 66, avenue des
Champs Elysées, Paris 8ème Seine (FR)**
Titulaire: **SOCIETE INDUSTRIELLE DES
OLEAGINEUX, 12, rue du Général De Gaulle,
Saint Laurent Blangy Pas- de- Calais (FR)**

(72) Inventeur: **Helme, Jean- Paul, 3, allée des
Sycomores Le Monastère, F-92410 Ville d'Avray
(FR)**

(74) Mandataire: **Maureau, Philippe, Cabinet Germain
& Maureau Le Britannia - Tour C 20, bld
Eugène Déruelle Boîte Postale 3011, F-69392 Lyon
Cédex 03 (FR)**

## Description

La présente invention a pour objet un lait artificiel pour l'alimentation des nouveaux-nés et des nourissons.

Les laits artificiels sont utilisés pour réaliser l'alimentation des enfants dans les semaines et les mois qui suivent la naissance, dans la mesure ou l'alimentation ne peut pas être réalisée avec le lait maternel.

Un lait artificiel est obtenu par melange de protéines, de glucides, de matières grasses, de vitamines et d'apports minéraux, qui doivent s'émulsionner dans l'eau pour donner un lait. Cette émulsification n'est possible qu'en présence d'émulsifiants.

Il est également connu que les laits artificiels ne contiennent pas certains éléments que contient le lait maternel. Il en est ainsi de l'acide arachidonique. Or, celui-ci n'est pas synthétisé par un enfant dans les semaines qui suivent sa naissance. L'organisme souffre donc d'une carence en acide arachidonique pouvant se traduire par une insuffisance de ce dernier pendant la période d'organogénése, spécialement pour le système nerveux central.

La demande de brevet français 2 197 605 concerne des perfectionnements apportés aux compléments nutritifs, indiquant que l'on peut améliorer la nutrition, et notamment la nutrition des nourrissons en apportant réguliérèment au corps humain de l'acide arachidonique. Cependant, l'origine de l'acide arachidonique n'est pas mentionnée dans ce document.

Il se pose donc le problème de l'obtention d'acide arachidonique et de son incorporation dans un lait artificiel. Une telle mise en oeuvre n'a jamais été effectuée, compte tenu des difficultés d'obtention d'acide arachidonique à partir des sources connues, telles que foie de porc ou d'autres abats avec tous les inconvénients qui en découlent (circuits de collecte convenant mal aux besoins de l'industrie diététique, traitement risquant d'altérer le produit ou de diminuer sa stabilité, nécessité de poursuivre les purifications jusqu'à obtention d'un acide gras pur...).

Par ailleurs, il est connu que le placenta contient 2,5 à 3 % d'un mélange lipidique complexe comprenant sensiblement 15 % de cholestérol libre et estérifié, 45 % de phospholipides et 40 % d'acides gras libres, glycérides partiels et triglycérides. Dans ces deux dernières fractions, la proportion d'acide arachidonique est de l'ordre de 16 à 20 %.

Le placenta d'origine humaine ou animale constitue donc une source extrêmement riche en acide arachidonique. L'origine humaine du produit est un avantage qui permet de réduire les contrôles visant à vérifier l'absence de composés nocifs, et qui assure une excellente adéquation entre la composition du produit et les besoins du nourrisson.

La présente invention vise à fournir un lait artificiel pour l'alimentation de nouveaux-nés et nourrissons comprenant un mélange de protéines, de glucides et de matières grasses, caractérisé en ce qu'il contient des acides gras polyinsaturés à chaîne longue, supérieure à C18, choisis parmi les acides C20: 4w6, C20: 3w6 et C22: 6w3 contenus dans un extrait lipidique de placenta humain.

Cet extrait lipidique contientde l'acide arachidonique en position 2, ce qui constitue une caractéristique avantageuse, du fait que les acides gras, situés dans cette position, sont assimilés rapidement.

En outre, il a été constaté que le pouvoir émulsionnant des lipides du placenta est particulièrement élevé, et qu'il est ainsi possible d'obtenir pour les laits artificiels une émulsion très fine et stable.

De plus, des expériences de stabilite ont montre la stabilité à l'oxydation de l'acide arachidonique d'origine placentaire pouvant expliquer en partie ce phénomène, en particulier certaines fractions de l'insaponifiable.

Des indices chimiques (peroxyde et carbonyle) ainsi que physicochimiques ($E^l_l$ à 232 nm; $E^l_l$ à 270 nm; $E^l_l$ 318 nm; indice d'acide et teneur en C20 : 4 w-6) ont vérifié la stabilité en fonction du temps.

Le lait selon l'invention se rapproche donc beaucoup plus du lait marernel que les laits traditionnels, tout en étant plus digeste, compte tenu de la finesse et de la stabilité de l'émulsion sous la forme de laquelle il se présente.

L'extrait lipidique du placenta est incorporé dans le mélange formant le lait dans des proportions telles que la teneur en acides gras polyinsaturés à chaîne longue (supérieure à C18) représente environ 1 % de la phase lipidique totale.

Selon une première possibilité, le lait contient la phase lipidique totale extraite du placenta.

Cette solution est intéressante car fournissant une excellente émulsion et évitant ou réduisant l'ajout d'antioxydants.

Selon une autre possibilité, le lait contient les seuls phospholipides récupérés à partir de la phase lipidique totale extraite d'un placenta. Ces phospholipides sont obtenus par récupération de la fraction insoluble à l'acétone par extraction à basse température. Si cette opération permet d'éliminer le cholestérol, les acides gras libres et les triglycérides, elle provoque la disparition d'un certain nombre d'antioxydants naturels.

De ce fait, il est préférable d'ajouter à la phase grasse des antioxydants, notamment ceux choisis dans la fraction insaponifiable des lipides du placenta, tels que des tocophérols, pour améliorer la résistance à l'oxydation.

Il est à noter que la phase lipidique totale peut être extraite par toute méthode appropriée, telle que la méthode de FOLCH.

Selon d'autres possibilités, le lait selon l'invention contient les acides gras libres ou les glycérides d'un extrait lipidique de placenta, ou encore un mélange de ces deux éléments ou un mélange de l'un de ces éléments avec les phospholipides d'un extrait de placenta.

Les tableaux I et II indiquent, respectivement, la composition en phospholipides d'un extrait de placenta et la composition en acides gras, d'une part, des lipides totaux et, d'autre part, des phospholipides totaux. Il est à noter qu'au tableau II, chaque acide gras est identifié par un nombre complexe, dont le premier élément désigne le nombre de C, le second élément désigne le nombre de doubles liaisons, et le troisième élément suivant le symbole w désigne la position de la première double liaison. L'acide arachidonique est l'acide gras en C20: 4w6.

**Tableau I**

**Composition en phospholipides (Moles%)**

| | |
|---|---|
| Phosphatidyl Choline | 43,20 |
| Sphingomyéline | 22,90 |
| Phosphatidyl Ethanolamine | 22,16 |
| Lysophosphatidyl Choline | 5,46 |
| Lysophosphatidyl Ethanolamine | 2,52 |
| Phosphatidyl Inositol | 1,30 |
| Cardiolipides | 1,23 |
| Phosphatidyl Sérine | 1,23 |
| | 100,00 |

**Tableau II**

**Composition en acides gras**
**.des lipides totaux**
**.des phospholipides totaux**
**(en % des acides gras totaux)**

| | Pourcentage | |
|---|---|---|
| nom de l'acide GRAS | lipides totaux | phospholipides totaux |
| 14:0 | 0.57 ± 0.02 | 0.62 ± 0.07 |
| 15:0 | 0.24 ± 0.03 | 0.37 ± 0.15 |
| 16:0 | 2.27 ± 0.17 | 3.59 ± 0.37 |
| 16:0 | 24.53 ± 0.19 | 28.89 ± 0.98 |
| 16:1 | 1.56 ± 0.10 | 1.33 ± 0.08 |
| 17:0 | 0.34 ± 0.06 | 0.50 ± 0.20 |
| 18:0 | 1.18 ± 0.15 | 1.87 ± 0.31 |
| 18:0 | 12.67 ± 0.55 | 13.19 ± 0.27 |
| 18:1 | 12.58 ± 0.18 | 11.17 ± 0.25 |
| 18:2 | 10.65 ± 0.03 | 8.82 ± 0.11 |
| 19:1 | 0.07 ± 0.02 | Traces |
| 18:3 w3 | Traces | |
| 20:0 | 0.16 ± 0.01 | 0.42 ± 0.10 |
| 20:1 | 0.22 ± 0.02 | 0.44 ± 0.24 |
| 20:2 w6 | 0.53 ± 0.00 | 0.80 ± 0.40 |
| 20:3 w6 | 4.69 ± 0.01 | 4.00 ± 1.20 |
| 20:4 w6 | 19.08 ± 0.45 | 16.03 ± 1.15 |
| 22:0 | 0.72 ± 0.12 | 1.36 ± 0.28 |
| 22:1 /ou 20:5 w3 | 0.22 ± 0.04 | 0.10 |
| 23:0 | 0.12 ± 0.02 | 0.15 ± 0.02 |
| 22:4 w6 | 0.69 ± 0.48 | 1.17 ± 0.08 |
| 22:5 w6 | 0.63 ± 0.04 | 0.38 ± 0.05 |
| 24:0 | 0.80 ± 0.10 | 1.14 |
| 24:1 /ou 22:5 w3 | 1.30 ± 0.16 | 1.61 ± 0.03 |
| 22:6 w3 | 3.59 ± 0.02 | 2.19 ± 0.26 |

## Revendications

1. Lait artificiel pour l'alimentation de nouveauxnés et nourrissons, comprenant un mélange de protéines, de glucides et de matières grasses, caractérisé en ce qu'il contient des acides gras polyinsaturés à chaîne longue, supérieure à C18, choisis parmi les acides C20 : 4w6, C 20 : 3w6 et C22 : 6w3 contenus dans un extrait lipidique de placenta humain.

2. Lait artificiel selon la revendication 1, caractérisé en ce qu'il contient les phospholipides d'un extrait lipidique de placenta.

3. Lait artificiel selon la revendication 1, caractérisé en ce qu'il contient les acides gras libres d'un extrait lipidique de placenta.

4. Lait artificiel selon la revendication 1, caractérisé en ce qu'il contient les glycérides d'un extrait lipidique de placenta.

5. Lait artificiel selon l'ensemble des revendications 1 à 4, caractérisé en ce qu'il contient une combinaison de deux des éléments constitués par les phospholipides, les acides gras libres, et les glycérides d'un extrait lipidique de placenta.

6. Lait artificiel selon l'ensemble des revendications 1 à 4, caractérisé en ce qu'il contient la phase lipidique totale extraite du placenta.

7. Lait artificiel selon l'une quelconque des revendications 1 à 6, caractérisé en ce que la quantité d'extrait lipidique est introduite dans le mélange, de telle sorte que la teneur en acides gras polyinsaturés à chaîne longue (supérieure à C18) soit de l'ordre de 1 % de la phase lipidique totale.

8. Lait artificiel selon l'une quelconque des revendications 1 à 7, caractérisé en ce qu'il contient des antioxydants, notamment ceux présents dans la fraction insaponifiable des lipides du placenta.

## Patentansprüche

1. Künstliches Milchprodukt für die Ernährung von Neugeborenen und Kleinkindern, enthaltend eine Mischung von Eiweißstoffen, Kohlehydraten und Fetten, dadurch gekennzeichnet , daß sie polyungesättigte langkettige Fettsäuren oberhalb von C18 enthält, ausgewählt unter den Säuren C20:4w6, C20: 3w6 und C22 : 6w3, die in einem Lipidextrakt der menschlichen Placenta enthalten sind.

2. Künstliches Milchprodukt nach Anspruch 1, dadurch gekennzeichnet , daß es die Phospholipide eines Lipidextraktes der Placenta enthält.

3. Künstliches Milchprodukt nach Anspruch 1, dadurch gekennzeichnet, daß es die freien Fettsäuren eines Lipidextraktes der Placenta enthält.

4. Künstliches Milchprodukt nach Anspruch 1, dadurch gekennzeichnet , daß es die Glyzeride eines Lipidextraktes der Placenta enthält.

5. Künstliches Milchprodukt nach den Ansprüchen 1 bis 4, dadurch gekenn- zeichnet, daß es eine Kombination von zwei Bestandteilen aus der Gruppe der Phospholipide, freien Fettsäuren und der Glyzeride eines Lipidextraktes der Placenta enthält.

6. Künstliches Milchprodukt nach den Ansprüchen 1 bis 4, dadurch gekenn- zeichnet, daß es die gesamte extrahierte Lipidphase der Placenta enthält.

7. Künstliches Milchprodukt nach einem der Ansprüche 1 bis 6, dadurch gekennzeichnet, daß die Menge des Lipidextraktes in die Mischung eingebracht wird, die einen Gehalt an polyungesättigten langkettigen Fettsäuren (oberhalb von C18) besitzt, der 1 % der gesamten Lipidphase beträgt.

8. Künstliches Milchprodukt nach einem der Ansprüche 1 bis 7, dadurch gekennzeichnet, daß es Antioxidantien enthält, insbesondere solche, die in der unverseifbaren Lipidfraktion der Placenta enthalten sind.

## Claims

1. An artificial milk for the nourishment of the newly-born and infante, comprising a mixture of proteins, glucides and fatty materials, characterized in that it contains polyunsaturated fatty acids with long chains greater than C18, selected from the acids C20 : 4w6, C20 : 3w6 and C22 : 6w3 contained in a lipid extract of human placenta.

2. An artificial milk according to Claim 1, characterized in that it contains the phospholipids from a lipid extract of placenta.

3. An artificial milk according to Claim 1, characterized in that it contains the free fatty acids from a lipid extract of placenta.

4. An artificial milk according to Claim 1, characterized in that it contains the glycerides from a lipid extract of placenta.

5. An artificial milk according to all of Claims 1 to 4, characterized in that it contains a combination of two of the components consisting of the phospholipids, the free fatty acids, and the glycerides from a lipid extract of placenta.

6. An artificial milk according to all of Claims 1 to 4, characterized in that it contains the total lipid phase extracted from the placenta.

7. An artificial milk according to any of Claims 1 to 6, characterized in that the quantity of lipid extract is introduced into the mixture in such a way that the content of polyunsaturated fatty acids with long chains (greater than C18) is of the order of 1 % of the total lipid phase.

8. An artificial milk according to any of Claims 1 to 7, characterized in that it contains anti-oxidants, notably those present in the unsaponifiable fraction of placenta lipids.